# EUROPEAN PATENT SPECIFICATION

(11) **EP 0 653 827 B1**
(45) Date of publication and mention of the grant of the patent: **29.01.1997**
(21) Application number: 94117745.3
(22) Date of filing: 10.11.1994
(51) Int. Cl.: H02K 1/16, H02K 3/12, H02K 21/22

(54) **An improved stator for two-phase electric machines**
Verbesserten Ständer für eine zweiphasige elektrische Maschine
Stator amélioré pour machine électrique biphasée

(30) Priority: 12.11.1993 IT TO930856
(43) Date of publication of application: 17.05.1995
(73) Proprietor: BITRON S.p.A., I-10064 Pinerolo (Torino) (IT)
(72) Inventor: De Filippis, Pietro, I-20052 Monza, Milano (IT); Avidano, Maurizio, I-10042 Nichelino, (Torino) (IT)
(74) Representative: Lotti, Giorgio

(56) References cited:
- GB-A- 1 543 150
- PATENT ABSTRACTS OF JAPAN vol. 7, no. 33 (E-157) 9 February 1983 ; & JP-A-57 186 936
- PATENT ABSTRACTS OF JAPAN vol. 12, no. 355 (E-661) 22 September 1988 ; & JP-A-63 110 928
- PATENT ABSTRACTS OF JAPAN vol. 9, no. 95 (E-310) 24 April 1985 ; & JP-A-59 222 051

## Description

The present invention refers to a stator for two-phase electric machines. The arrangement of the stator is optimised to determine impedance of the phases, and obtain minimum thickness of the winding teeth, thermal and electric insulation between the coils and the maximum surface of copper exposed for cooling.

This arrangement of the stator is particularly advantageous for two-phase electric machines having a flat structure, i. e. a structure providing for each coil a length of wire on the teeth greater or of the same order of length compared to the wire in the slot.

At present, there are diffused two arrangements for two-phase stators.

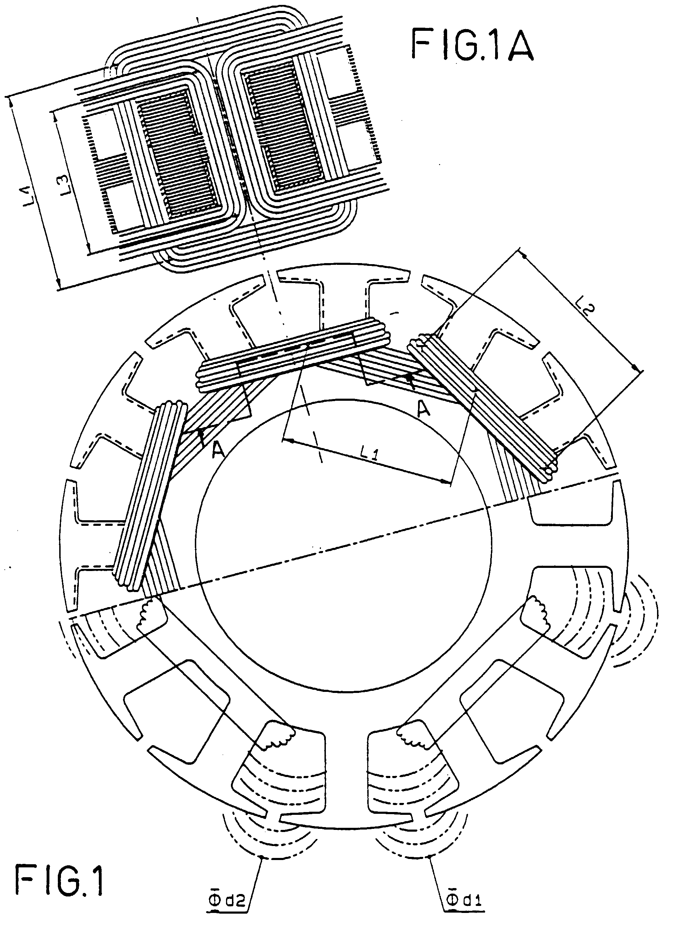

The first of the two arrangements, is shown in FIGS. 1 and 1A, where coils are characterized by L1 = L2 and a closing of the magnetic fluxes very similar for the two phases (Φd1 = Φd2). This arrangement causes the coils to be partially superimposed on the stator teeth and causes an increase in the length of the average turn of the outer coils (L4 > L3). This increases both costs and electric resistance. Also, this kind of arrangement results in increased axial bulk, reduction of coil surfaces exposed for cooling, and physical contact between coils of different phases, so that electric insulation is left to the copper wire enamel.

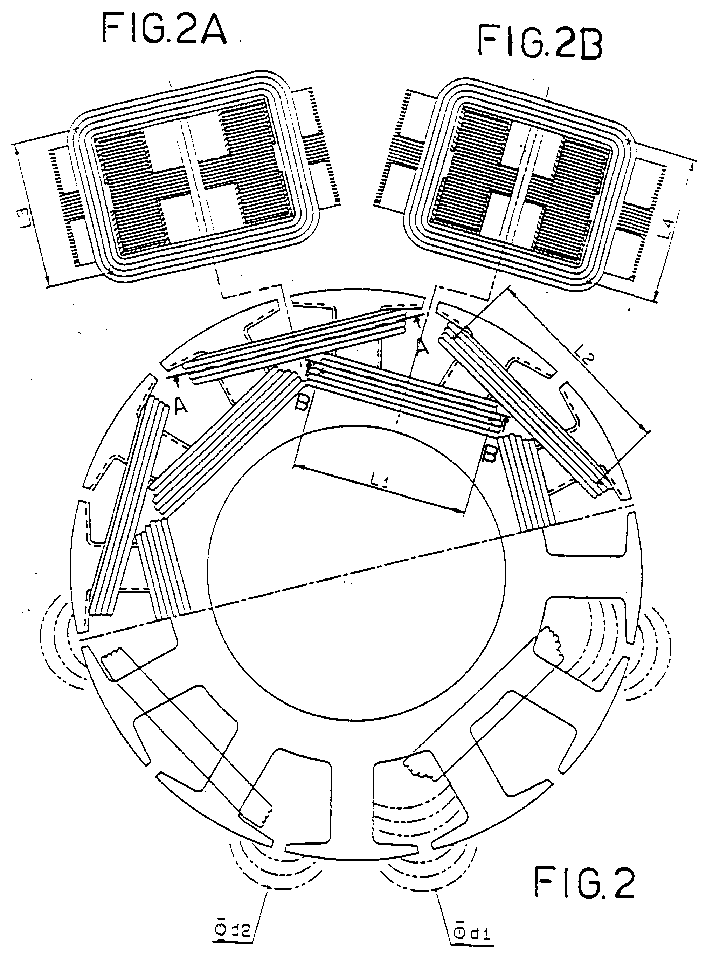

The second arrangement that is currently used, as shown in FIGS. 2, 2A and 2B, tends to increase the coil surface which remains exposed to the air. In this arrangement, the coils are separated by being wound alternately on the inner and outer part of the stator teeth, in order to provide constant axial bulk for each coil (L3 = L4).

However, this kind of structure, besides resolving all of the inconveniences cited for the first one, for obvious geometric reasons provides substantial difference between the length of the inner and outer coils (L2 > L1). In addition, the dispersed magnetic fluxes have a different closing (Φd2 < Φd1).

The combination of these two factors leads to a lack of balance between the time constant (L/R) of the inner coils with respect to the outer coils. The inner coils will exhibit a higher L (greater dispersed flux) and a lower R (shorter average turn); as a consequence, efficiency of the machine is worsened.

Moreover, physical separation of the outer coils requires particular devices in the winding machine. As a matter of fact, owing to the cone shape of the walls of the slots, as the outer coils are wound, the taut wire tends to slide inwardly and rest on the inner coils, thereby possibly causing insulation problems.

It is an object of this invention to solve the above identified problems.

The above object is attained, according to the present invention, by a stator for two-phase electric machines according to claim 1.

Further advantages will be more apparent from the ensuing description with reference to the enclosed drawings of a preferred but not limiting embodiment of the present invention, in which:
- FIG. 1: is a plan view of a stator partially provided with a first type of windings according to prior art, as previously discussed;
- FIG. 1A: is a cross sectional view taken along line A-A of FIG. 1;
- FIG. 2 is: a plan view of a stator partially provided with a second type of windings according to prior art, as previously discussed;
- FIGS. 2A: and 2B are a cross sectional views taken along lines A-A and B-B of FIG. 2, respectively;
- FIG. 3: is a view of a stator according to the invention with part of the windings shown;
- FIGS. 3A: and 3B are a cross sectional views taken along lines A-A and B-B of FIG. 3, respectively;
- FIG. 4: is a plan view of the stator according to the invention showing the fluxes of the magnetising field;
- FIG. 4A: is a schematically straightened side view of the outer profile of the stator of FIG. 4, from point A to point B.

With reference to the drawings, numeral 1 designates a stator, in particular for a flat two-phase electric machine. The stator consists of a plurality of stacked stator core laminations, preferably of ferromagnetic material.

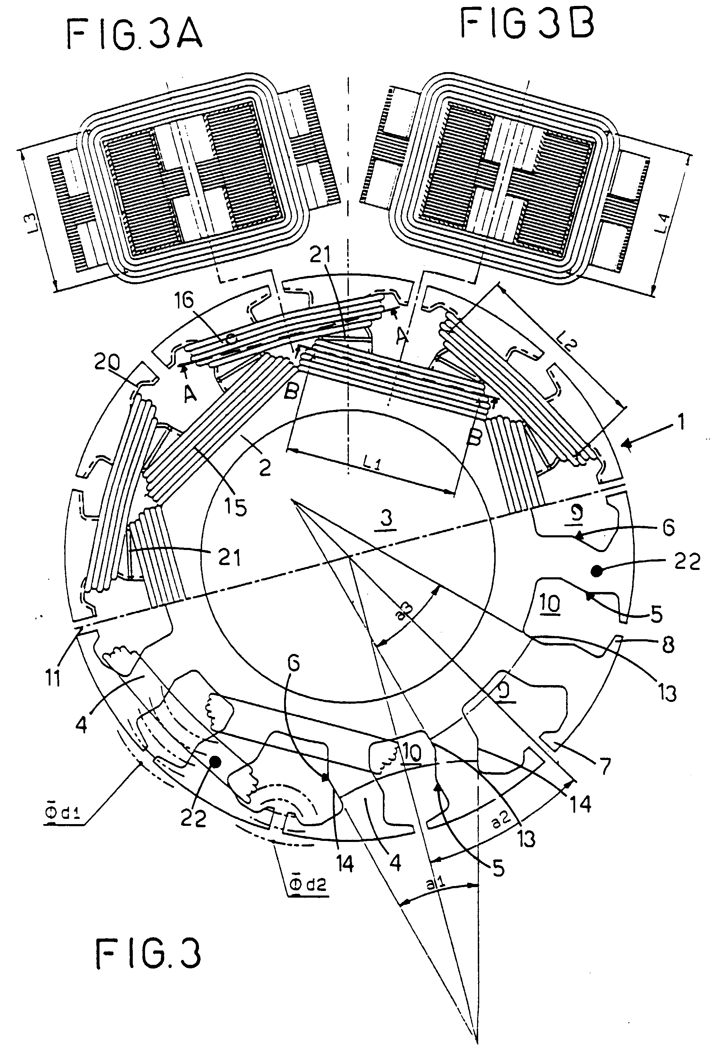

Said laminations are formed by a variously shaped disc 2 having a central bore 3 the width of which is not fixed. Equally spaced teeth 4 are obtained in the periphery of the disc. According to the invention (FIGS. 3, 3A and 3B), each tooth 4 has sides with two different contours 5, 6, whilst in prior art embodiments of FIGS. 1 and 2, contours are equal.

Teeth 4 are substantially T-shaped providing two opposite peripheral, circumferentially oriented tongues 7, 8. According to known prior art devices (FIGS. 1 and 2), conventional tongues are equal; according to the present invention (FIGS. 3, 3A and 3B), the tongues have different contours for equalising the closing of dispersed magnetic fluxes (Φd1 = Φd2).

As shown in FIG. 3, both the teeth 4 and tongues 7, 8 are arranged so that equal contours are alternately facing, determining first and second slots 9 and 10 of different shapes, alternately arranged along the circumference of the disc 2.

The tongues 7, 8 are separated from those of the adjacent tooth by a passage 11 that gives access to the corresponding slot. Contours 5, 6 defining the side walls of the teeth 4 are so shaped that the distance L1 between the radially innermost portion 13 of the first two equal, opposite contours 5 of a pair of subsequent teeth along the circumference of the disc is substantially equal to distance L2 between the medium portion 14 of the second two equal, opposite contours 6 of the pair of teeth formed by the second one of the preceding pair of teeth and the following one along the circumference.

Further, as shown in FIG. 3, contours 5 and 6 have the characteristic that the straight lines passing by the radially innermost portions 13 of the first two equal, opposite contours 5 separated by a first slot 9, define a centripetal angle a3 equal to centrifugal angle a1 which is defined by the straight lines passing by the medium portions 14 of two second equal, opposite contours 6 separated by a second slot 10.

According to the invention, in order to keep coils 15, 16 in their correct arrangement, these are wound, respectively, onto the pairs of radially innermost portions 13 between which each slot 9 is located, i. e. on each centripetal cone a3, and also onto the pairs of medium portions 14 between which each slot 10 is located, i. e. on each centrifugal cone a1.

This arrangement allows the coil 16 to stay separate from the underlying coil 15 during manufacturing and use. Also, it provides equal length for inner and outer coils (L1 = L2).

As known, the lamination stack is covered by terminal boards of insulating material, the contour 20 of which follows the contour of the laminations and is shown in phantom in the drawings. In the illustrated embodiment, obtained in said insulating material are separators 21 corresponding to the near ends of portions 13 and 14. Separators 21 are advantageously useful in keeping coils 13, 14 apart.

The medium length of the inner and medium radial coils is equal due to the fact that the lengths L1 and L2 are equal (also thicknesses L3 and L4 are equal), as the coils both contact the outer surface of the terminal boards because they are not overlapping as in prior art arrangements.

In order to optimise coil distribution, equal angles a1 and a3 should also be equal to angle a2 defined by the axes of two adjacent slots 9, 10 as shown in FIG. 3.

Like prior art stators, the described stator is formed by thin laminations insulated therebetween by an insulating coating or a surface treatment for reducing as much as possible loss of power in the lamination stack due to parasitic currents.

On the other hand, the laminations have to be secured to each other for reasons of mechanical stability, usually by riveting or caulking that create electric bridges between the laminations. This frustrates insulation and causes parasitic currents to increase greatly.

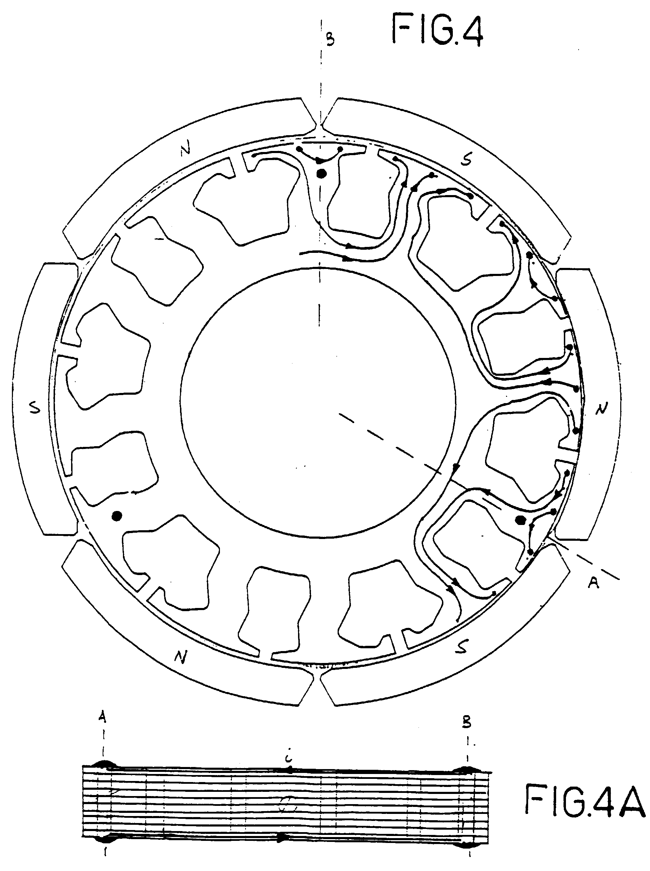

In the present invention a technique is used for fixing the lamination which allows to use a reduced number of rivets or calkings without affecting efficiency of the electric machine consistently. This technique is increasingly more advantageous the higher the number of poles of the machine is. As shown in the example of FIG. 4, rivets 22 are disposed at an angle with respect to each other on the stator teeth 4, so that the magnetic flux Φ linked by the ideal turns passing through the pairs of rivets 22 and the laminations indicated in FIG. 4A is zero for any angular position of the rotor.

As known, in this way electromotive force linked to those turns is zero, so no parasitic currents are generated. In the example shown in FIG. 3 for a six-pole machine, calkings are disposed on teeth at a 120° angle. This angular distance corresponds to the distance between two magnetic sectors having the same polarity that generate the magnetising flux. The overall flux passing through the turn is zero, due to the magnetic field produced by the coils and the magnetising field, as pointed out in FIG. 4.

Generally, the angular distance between the rivets 22 should be 360° divided by the number of pole pairs, or a multiple of this number.

Naturally, this technique will be advantageous with any mechanical locking system of known kind which generates electric contact between the laminations of teeth 4.

## Claims

1. A stator for two-phase electric machines, consisting of a plurality of stacked laminations made of ferromagnetic discs and closed frontally by two terminal boards (20) of insulating material; a plurality of radiating teeth (4) being obtained in said stack of laminations and terminal boards, said teeth having opposite peripheral end tongues (7, 8) separated (11) so as to form a plurality of slots (9, 10) equally spaced radially between side walls (5, 6) of the plurality of adjacent teeth (4); said slots (9, 10) being crossed by the wire being wound on the side walls (5, 6) of each pair of adjacent teeth (4) to form coils (15, 16) alternately arranged in two rows, characterized in that each tooth (4) has portions (13, 14) of the opposite side walls (5, 6) on which the coils (15, 16) are wound, said portions (13, 14) being radially separated and disposed at an angle so that the straight lines passing by each radially outer pair of portions (14) on which the coils (16) are wound on a first row define a centripetal angle (a1) equal to a centrifugal angle (a3), which is defined by the straight lines passing by each pair of radially inner portions (13) on which the coils (15) of the other row are wound, whereby coils (15, 16) disposed on two circumferentially separated rows are defined.

2. A stator according to claim 1, characterized in that the distance (L2) between the radially outer portions (14) on which each coil (16) of the first row is wound is equal to the distance (L1) between the radially inner portions (13) on which each coil (15) of the second row is wound, so that the coils (15, 16) of the two rows have equal length.

3. A stator according to claim 1, characterized in that separators (21) are provided on the teeth of the terminal boards (20), said separators being disposed though the teeth so as to separate said portions (13, 14) and the coils (15, 16) wound thereon.

4. A stator according to claim 1, characterized in that the ends of the opposite tongues (7, 8) of the teeth (4) have different contours, so as to equalise the closing of dispersed magnetic fluxes (Φd1, Φd2).

5. A stator according to claim 1, characterized in that the plurality of laminations is locked by riveting (22) or caulking or another known mechanical system causing electric contact between the laminations on the teeth (4); rivets being disposed at an angle being 360° divided the number of pole pairs of the machine, or at an angle equal to that existing between two magnetic sectors generating the magnetic field and having the same polarity, so as to cut down power loss due to parasitic currents generated within the lamination stack.

## Patentansprüche

1. Stator für eine zweiphasige elektrische Maschine, der aus einer Vielzahl von übereinander angeordneten Schichten aus ferromagnetischen Platten besteht und stirnseitig durch zwei Abschlußbretter (20) aus isolierendem Material verschlossen ist; eine Vielzahl von strahlenförmig ausgebreiteten Zähnen (4) ist in dem Stapel von Schichten und Abschlußbrettern vorgesehen, wobei die Zähne gegenüberliegende periphere Endzungen (7, 8) aufweisen, die geteilt (11) sind, so daß sie eine Vielzahl von Schlitzen (9, 10) bilden, die gleichmäßig radial zwischen den Seitenwänden (5, 6) der Vielzahl von angrenzenden Zähnen (4) angeordnet sind; die Schlitze (9, 10) werden von dem Draht gekreuzt, der auf die Seitenwände (5, 6) jedes Paares von angrenzenden Zähnen zur Bildung von Spulen (15, 16) gewickelt ist, die abwechselnd in zwei Reihen angeordnet sind,
dadurch gekennzeichnet,
daß jeder Zahn (4) Abschnitte (13, 14) der gegenüberliegenden Seitenwände (5, 6) aufweist, auf denen die Spulen (15, 16) gewickelt sind, wobei die Abschnitte (13, 14) radial geteilt sind und in einem solchen Winkel angeordnet sind, daß die geraden Linien, die an jedem radial äußeren Paar von Abschnitten (14) vorbeilaufen, auf denen die Spulen (16) auf einer ersten Reihe gewickelt werden, einen zentripetalen Winkel (a1) definieren, der einem zentrifugalen Winkel (a3) entspricht, der durch die geraden Linien definiert ist, die an jedem Paar von radial inneren Abschnitten (13) vorbeilaufen, auf denen die Spulen (15) der anderen Reihe gewickelt werden, wodurch Spulen (15, 16) definiert sind, die auf zwei in Umfangsrichtung angeordneten getrennten Reihen angeordnet sind.

2. Stator nach Anspruch 1,
dadurch gekennzeichnet,
daß der Abstand (L2) zwischen den radial äußeren Abschnitten (14), auf denen jede Spule (16) der ersten Reihe gewickelt wird, dem Abstand (L1) zwischen den radial inneren Abschnitten (13) entspricht, auf denen jede Spule (15) der zweiten Reihe gewickelt wird, so daß die Spulen (15, 16) der beiden Reihen dieselbe Länge aufweisen.

3. Stator nach Anspruch 1,
dadurch gekennzeichnet,
daß auf den Zähnen der Abschlußbretter (20) Abstandsstücke (21) vorgesehen sind, die durch die Zähne hindurch angeordnet sind, so daß sie die Abschnitte (13, 14) und die darauf gewickelten Spulen (15, 16) teilen.

4. Stator nach Anspruch 1,
dadurch gekennzeichnet,
daß die Enden der gegenüberliegenden Zungen (7, 8) der Zähne (4) verschiedene Umrisse haben und dadurch den Schluß von zerstreutem Magnetfluß (Φ d1, Φ d2) ausgleichen.

5. Stator nach Anspruch 1,
dadurch gekennzeichnet,
daß die Vielzahl von Schichten durch Nieten (22) oder Verzapfen oder ein anderes bekanntes mechanisches System verschlossen ist, das elektrischen Kontakt zwischen den Schichten auf den Zähnen (4) verursacht; dabei sind Nieten in einem Winkel angeordnet, der 360° geteilt durch die Anzahl von Polpaaren der Maschine beträgt, oder in einem Winkel, der dem Winkel entspricht, der zwischen zwei magnetischen Sektoren, die das magnetische Feld erzeugen und dieselbe Polarität haben, besteht, um Energieverlust aufgrund von Störstrom, der innerhalb des Schichtstapels erzeugt wird, zu verringern.

## Revendications

1. Stator destiné à des machines électriques biphasées, constitué d'une pluralité de tôles magnétiques empilées faite de disques ferromagnétiques et refermée sur l'avant par deux plaquettes à bornes (20) de matériau isolant, une pluralité de dents rayonnantes (4) étant réalisées dans ledit empilement de tôles magnétiques et lesdites plaquettes à bornes, lesdites dents comportant des languettes d'extrémité périphériques opposées (7, 8) séparées (11) de façon à former une pluralité de fentes (9, 10) radialement espacées régulièrement entre des parois latérales (5, 6) de la pluralité des dents adjacentes (4), lesdites fentes (9, 10) étant traversées par le fil qui est enroulé sur les parois latérales (5, 6) de chaque paire de dents adjacentes (4) afin de former des enroulements (15, 16) agencés de façon alternée en deux rangées, caractérisé en ce que chaque dent (4) comporte des parties (13, 14) des parois latérales opposées (5, 6) sur lesquelles les enroulements (15, 16) sont enroulés, lesdites parties (13, 14) étant séparées radialement et disposées suivant un angle tel que les lignes droites passant par chaque paire radialement à l'extérieur des parties (14) sur lesquelles les enroulements (16) sont enroulés sur une première rangée, définissent un angle centripète (a1) égal à un angle centrifuge (a3), qui est défini par les lignes droites passant par chaque paire de parties radialement à l'intérieur (13) sur lesquelles les enroulements (15) de l'autre rangée sont enroulés, d'où il résulte que l'on définit des enroulements (15, 16) disposés sur deux rangées séparées de façon circonférentielle.

2. Stator selon la revendication 1, caractérisé en ce que la distance (L2) entre les parties radialement à l'extérieur (14) sur lesquelles chaque enroulement (16) de la première rangée est enroulé, est égale à la distance (L1) entre les parties radialement à l'intérieur (13) sur lesquelles chaque enroulement (15) de la seconde rangée est enroulé, de sorte que les enroulements (15, 16) des deux rangées ont une longueur égale.

3. Stator selon la revendication 1, caractérisé en ce que des séparations (21) sont prévues sur les dents des plaquettes à bornes (20), lesdites séparations étant disposées au travers des dents de façon à séparer lesdites parties (13, 14) et les enroulements (15, 16) enroulés sur celles-ci.

4. Stator selon la revendication 1, caractérisé en ce que les extrémités des languettes opposées (7, 8) des dents (4) présentent des contours différents, de façon à égaliser le bouclage des flux magnétiques dispersés (Fd1, Fd2).

5. Stator selon la revendication 1, caractérisé en ce que la pluralité de tôles magnétiques est bloquée par rivetage (22) ou matage ou tout autre système mécanique connu, provoquant un contact électrique entre les tôles magnétiques sur les dents (4), des rivets étant disposés suivant un angle égal à 360° divisé par le nombre de paires de pôles de la machine, ou bien suivant un angle égal à celui qui existe entre deux secteurs magnétiques générant le champ magnétique et présentant la même polarité, de façon à éliminer les pertes de puissance dues aux courants parasites générés à l'intérieur de l'empilement de tôles magnétiques.
